# EUROPEAN PATENT APPLICATION

(11) **EP 4 700 559 A1**
(43) Date of publication of application: **25.02.2026**
(21) Application number: 25156745.9
(22) Date of filing: 10.02.2025
(51) Int. Cl.: G06F 3/12, G06Q 10/06

(54) **INFORMATION PROCESSING SYSTEM, PROGRAM, AND INFORMATION PROCESSING METHOD**

(30) Priority: 20.08.2024 JP 2024138495
(71) Applicant: FUJIFILM Business Innovation Corp., Minato-ku Tokyo (JP)
(72) Inventor: ARAKAWA, Kei, Yokohama-shi, Kanagawa (JP); NAGASHIMA, Kazuki, Yokohama-shi, Kanagawa (JP); SASAKI, Kimihiko, Yokohama-shi, Kanagawa (JP); MARUYAMA, Kosuke, Yokohama-shi, Kanagawa (JP); NOGUCHI, Daisuke, Yokohama-shi, Kanagawa (JP)
(74) Representative: Kurig, Thomas

(57) **Abstract**

An information processing system includes: a processor configured to: display a schedule region defined by a first axis and a second axis, in which schedule frames of job execution devices that are job assignment candidates are arranged and displayed in a direction of the first axis, and the second axis forms a time axis; display, in the schedule frame of the job execution device, a job display element corresponding to a job that is assigned to the job execution device and indicating an execution time and a required time for the job in the job execution device; refer to, in response to a movement operation performed by a user to move a job display element corresponding to an unscheduled job to the schedule region, processing capacity information of a job execution device corresponding to a moved position of the job display element and attribute information of a job corresponding to the job display element, to calculate the required time for the job in the job execution device; and display the job display element in a shape corresponding to the calculated required time.

## Description

### BACKGROUND OF THE INVENTION

### (i) Field of the Invention

The present invention relates to an information processing system, a program, and an information processing method.

### (ii) Description of Related Art

For example, schedule management of jobs may be performed by using a schedule table formed by representing a time in a horizontal axis direction and arranging names of job execution devices, such as printers, as assignment candidates in a vertical axis direction. A schedule manager refers to the schedule table displayed on a screen to schedule a job that is not yet scheduled.

As a more specific interface, for example, there is a user interface in which a schedule table is displayed on a screen, and a drag-and-drop operation for a display element, such as an icon of a job that is not yet scheduled to a free time in the schedule table is performed to schedule the job that is not scheduled.

### SUMMARY OF THE INVENTION

A required time for the job differs depending on attribute information indicating a content of the job, for example, in a case of a printing job, attribute information such as the number of sheets to be printed or single-sided/double-sided. In addition, even for the same job, the required time differs depending on a processing capacity of the job execution device or the like.

Therefore, in a case in which the required time for the job is indicated by a shape of a job display element provided in association with each job, for example, it is preferable that the job display element is displayed in a shape corresponding to the processing capacity of the job execution device or the like.

An object of the present invention is to display a required time for a job, which differs depending on a processing capacity of a job execution device, in a visually recognizable manner.

According to an aspect of the present disclosure, there is provided an information processing system including: a processor configured to: display a schedule region defined by a first axis and a second axis, in which schedule frames of job execution devices that are job assignment candidates are arranged and displayed in a direction of the first axis, and the second axis forms a time axis; display, in the schedule frame of the job execution device, a job display element corresponding to a job that is assigned to the job execution device and indicating an execution time and a required time for the job in the job execution device; refer to, in response to a movement operation performed by a user to move a job display element corresponding to an unscheduled job to the schedule region, processing capacity information of a job execution device corresponding to a moved position of the job display element and attribute information of a job corresponding to the job display element, to calculate the required time for the job in the job execution device; and display the job display element in a shape corresponding to the calculated required time.

In addition, the processor may be configured to: further refer to attribute information of a job corresponding to a job display element present before the moved position in a schedule frame of the job execution device corresponding to the moved position, to calculate the required time.

In addition, the processor may be configured to: in a case in which attribute information of a job scheduled after the moved position is referred to, notify of a warning in a case in which execution of the job corresponding to the job display element affects execution of the job scheduled after the moved position.

In addition, the attribute information of the job may be attribute information in which preparation work for executing a subsequent job to be executed is required in a case in which a setting content of attribute information of each job to be subsequently executed is different.

In addition, the processor may be configured to: calculate a required time for the job in a case in which a job execution device estimated to be most likely to be assigned the job executes the job, for the job display element corresponding to the unscheduled job, in accordance with a predetermined rule; and display the job display element in a shape corresponding to the calculated required time.

In addition, the processor may be configured to: in a case in which the user moves the job display element of the unscheduled job by a drag operation as the movement operation, change the shape of the job display element in the schedule region in accordance with a required time for the job in a job execution device corresponding to a current position of the job display element.

In addition, the processor may be configured to: schedule a job corresponding to the job display element at a position at which the user performs a drop operation for the job display element.

In addition, the processor may be configured to: display information about an influence on a job that is already scheduled, before scheduling the unscheduled job at a position to which the job display element is moved.

According to another aspect of the present disclosure, there is provided a program causing a computer to implement: a function of displaying a schedule region defined by a first axis and a second axis, in which schedule frames of job execution devices that are job assignment candidates are arranged and displayed in a direction of the first axis, and the second axis forms a time axis; a function of displaying, in the schedule frame of the job execution device, a job display element corresponding to a job that is assigned to the job execution device and indicating an execution time and a required time for the job in the job execution device; a function of referring to, in response to a movement operation performed by a user to move the job display element to the schedule region, processing capacity information of a job execution device corresponding to a moved position of the job display element and attribute information of a job corresponding to the job display element, to calculate the required time for the job in the job execution device; and a function of displaying the job display element in a shape corresponding to the calculated required time.

According to still aspect of the present disclosure, there is provided an information processing method including: displaying a schedule region defined by a first axis and a second axis, in which schedule frames of job execution devices that are job assignment candidates are arranged and displayed in a direction of the first axis, and the second axis forms a time axis; displaying, in the schedule frame of the job execution device, a job display element corresponding to a job that is assigned to the job execution device and indicating an execution time and a required time for the job in the job execution device; referring to, in response to a movement operation performed by a user to move the job display element to the schedule region, processing capacity information of a job execution device corresponding to a moved position of the job display element and attribute information of a job corresponding to the job display element, to calculate the required time for the job in the job execution device; and displaying the job display element in a shape corresponding to the calculated required time.

According to the first aspect of the present disclosure, the required time for the job, which differs depending on the processing capacity of the job execution device, can be displayed in a visually recognizable manner.

According to the second aspect of the present disclosure, a required time for a job to be scheduled in the future can be calculated in consideration of an influence of the job executed immediately before a scheduled time.

According to the third aspect of the present disclosure, in a case in which the job is scheduled at the moved position of the job display element displayed in an unassigned job display region, and the job affects a job to be executed immediately after the scheduled time, notification of the fact can be issued.

According to the fourth aspect of the present disclosure, the required time can be calculated in consideration of a time required for the preparation work that occurs in a case in which the job is executed.

According to the fifth aspect of the present disclosure, notification of an approximate required time can be issued before actually scheduling the job.

According to the sixth aspect of the present disclosure, notification of a required time in a case in which the job is actually executed by the job execution device corresponding to the current position of the job display element can be issued before actually scheduling the job in the job execution device.

According to the seventh aspect of the present disclosure, the schedule for the job corresponding to the job display element being operated can be confirmed.

According to the eighth aspect of the present disclosure, notification of an influence on the job that is already scheduled in a case in which the job that is not yet scheduled is actually scheduled can be issued in advance.

According to the ninth aspect of the present disclosure, the required time for the job, which differs depending on the processing capacity of the job execution device, can be displayed in a visually recognizable manner.

According to the tenth aspect of the present disclosure, the required time for the job, which differs depending on the processing capacity of the job execution device, can be displayed in a visually recognizable manner.

### BRIEF DESCRIPTION OF THE DRAWINGS

Exemplary embodiment(s) of the present invention will be described in detail based on the following figures, wherein:
Fig. 1 is a diagram showing an example of a block configuration of an information processing apparatus according to exemplary embodiment 1;
Fig. 2 is a diagram showing an example of display of a schedule setting screen in Exemplary Embodiment 1;
Fig. 3 is a flowchart showing schedule setting processing in Exemplary Embodiment 1;
Fig. 4 is a diagram showing a user operation on the schedule setting screen shown in Fig. 2 in Exemplary Embodiment 1;
Fig. 5 is a diagram showing a state in a case in which a job card in an unassigned job display region is moved in response to the user operation on the schedule setting screen shown in Fig. 2 in Exemplary Embodiment 1;
Fig. 6 is a diagram showing a state in which the job card in the unassigned job display region is moved to a schedule frame of a printer in response to the user operation on the schedule setting screen shown in Fig. 2 in Exemplary Embodiment 1;
Fig. 7 is a diagram showing a state in which the job card in the unassigned job display region is moved to the schedule frame of the printer in response to the user operation and then further moved to a schedule frame of another printer on the schedule setting screen shown in Fig. 2 in Exemplary Embodiment 1;
Fig. 8 is a diagram in which a state in which a job card in an unassigned job display region is moved to a schedule frame of a printer in response to a user operation is added to the schedule setting screen shown in Fig. 2 in Exemplary Embodiment 2; and
Fig. 9 is a flowchart showing verification processing in Exemplary Embodiment 2.

### DETAILED DESCRIPTION OF THE INVENTION

Hereinafter, exemplary embodiments of the present invention will be described with reference to the accompanying drawings.

### Exemplary Embodiment 1.

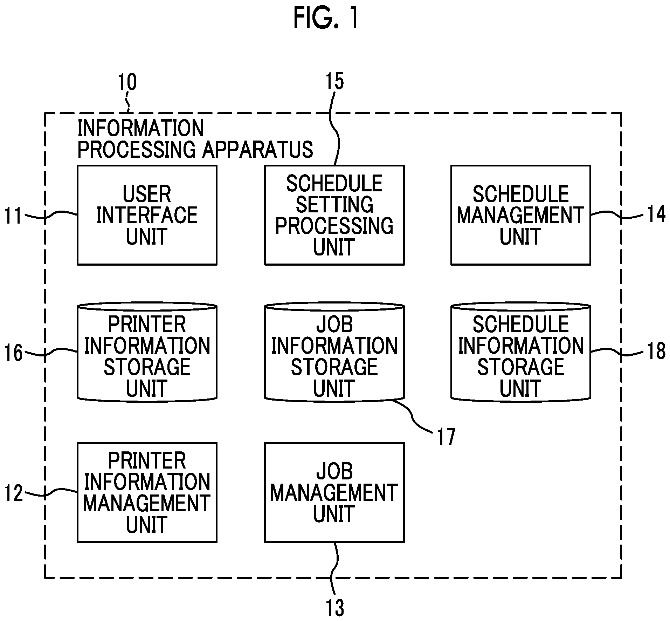

Fig. 1 is a diagram showing an example of a block configuration of an information processing apparatus 10 in the present exemplary embodiment. The information processing apparatus 10 in the present exemplary embodiment is an information apparatus used for schedule management of jobs. In the present exemplary embodiment, a printing job will be described as an example of the job. Therefore, a job execution device is implemented by a device (in the present exemplary embodiment, referred to as a "printer") such as a printer or a multifunctional machine having a printing function.

The information processing apparatus 10 according to the present exemplary embodiment can be implemented by an existing general-purpose hardware configuration such as a personal computer (PC). That is, the information processing apparatus 10 includes a processor, a ROM, a RAM, a hard disk drive (HDD) as a storage unit, a network interface provided as a communication unit, and a user interface including an input unit such as a mouse or a keyboard and a display unit such as a display.

As shown in Fig. 1, the information processing apparatus 10 in the present exemplary embodiment includes a user interface unit 11, a printer information management unit 12, a job management unit 13, a schedule management unit 14, a schedule setting processing unit 15, a printer information storage unit 16, a job information storage unit 17, and a schedule information storage unit 18.

The user interface unit 11 displays information on the display and receives data input in response to a user operation. The printer information management unit 12 manages information (hereinafter, referred to as "printer information") related to a printer that is a candidate for a schedule assignment destination in the present exemplary embodiment. The printer information management unit 12 stores the printer information in the printer information storage unit 16 and performs information management. The job management unit 13 manages information (hereinafter, referred to as "job information") related to a job executed by any printer. The job management unit 13 stores the job information in the job information storage unit 17 and performs information management. The schedule management unit 14 manages information (hereinafter, referred to as "schedule information") related to a schedule for a job to be managed by the job information. The schedule management unit 14 stores the schedule information in the schedule information storage unit 18 and performs information management. The schedule setting processing unit 15 executes processing of referring to the printer information, the job information, and the schedule information, and setting the schedule for the job in response to the user operation. The schedule information set for each job by the schedule setting processing unit 15 is registered in the schedule information storage unit 18, and is managed by the schedule management unit 14.

The printer information stored in the printer information storage unit 16 includes at least processing capacity information of the printer in identification information such as a name of the printer. In the present exemplary embodiment, as an example, a case will be described in which a "printer name" is used as the identification information. The processing capacity information is attribute information indicating a processing capacity of the printer. In addition, the processing capacity information includes information indicating the presence or absence of a function specified by printing attribute information of the job. The processing capacity information includes, for example, a type of the printer (continuous form printer, digital/offset printer, or model number), a type of paper that can be printed (for example, continuous paper/cut paper), a paper size that can be handled, single-sided/double-sided, color/monochrome, and a printing speed (page per minute (ppm) or the like). The processing capacity information described here is an example, and can include other indicators indicating the processing capacity of the printer.

In the job information stored in the job information storage unit 17, job attribute information is associated with identification information (hereinafter, referred to as a "job ID") uniquely set for the job. The job attribute information includes information defining the job, such as an owner of the job, a generation date and time, and a priority, and the printing attribute information. The printing attribute information includes a type of processing, a type of paper, a paper size, single-sided/double-sided, color/monochrome, the number of copies, and the like. The job information described here is an example, and is not limited thereto.

The schedule information stored in the schedule information storage unit 18 includes information related to a schedule for a job that is a schedule setting target. The schedule setting target is managed by the job information, but is classified into a job that is already scheduled, that is, a job (hereinafter, also referred to as an "assigned job") assigned to any printer, and a job (hereinafter, also referred to as an "unassigned job") that is not yet assigned to the printer because the job is not yet scheduled. The schedule information includes information in which information (for example, the job ID) for specifying the job (that is, the "assigned job") assigned to the printer and information related to execution of the job are associated with each other for each printer. The information related to the execution of the job includes an execution time and a required time. The execution time and the required time will be described in detail below.

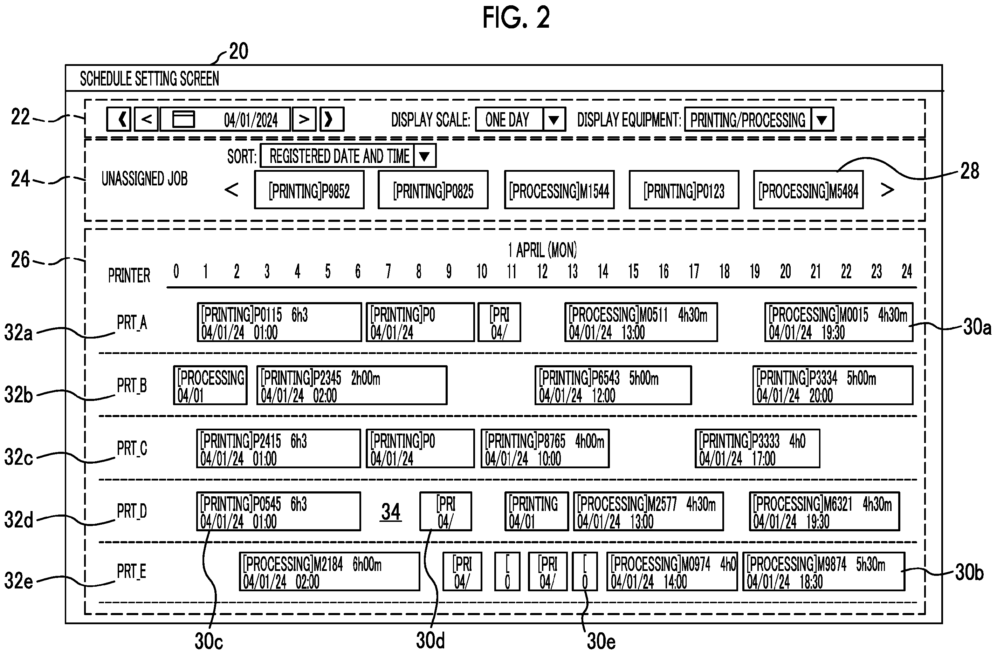

The schedule information need only include information items required for generating a schedule setting screen (Fig. 2), and constituent data items or data structures are not limited to the above description. The schedule information is associated with the printer information by the printer name, and is associated with the job information by the job ID.

Next, in the present exemplary embodiment, a configuration of the schedule setting screen used in a case in which the schedule is set for the unassigned job will be described with reference to Fig. 2.

Fig. 2 is a diagram showing an example of display of a schedule setting screen 20 in the present exemplary embodiment. The schedule setting screen 20 includes a display condition setting region 22, an unassigned job display region 24, and a schedule setting region 26. In the display condition setting region 22, a condition for narrowing down the jobs that are display targets in the schedule is set. In Fig. 2, a display range is set by a date and time and a display scale. Fig. 2 shows an example in which one day (24 hours) of April 1, 2024 is set as the display range. The display scale is not limited to a day, and can be set in various ranges such as a month, a week, and a morning. In addition, display equipment indicates a job execution device that is a display target, in other words, the type of the processing of the job, but Fig. 2 shows an example in which a device capable of executing printing and processing is selected. Fig. 2 shows an example in which "PRT_A", "PRT_B", "PRT_C", "PRT_D", and "PRT_E" are selected as the corresponding equipment.

In the unassigned job display region 24, a job card 28 corresponding to each unassigned job among the jobs of which the job information is stored in the job information storage unit 17 is displayed as a job display element. In the present exemplary embodiment, the job display element is displayed in a rectangular card shape, and thus is referred to as the job card 28. In Fig. 2, an example is shown in which the type of the processing and the job ID are displayed in the job card 28 of the unassigned job, but the job information to be displayed is not limited thereto.

In addition, an arrangement order of the job cards 28 can be set depending on an attribute of the job. In Fig. 2, the job cards 28 are arranged in an order of a registration date and time of the job. In a case in which all the job cards 28 cannot be displayed in the unassigned job display region 24, a user can display the job card 28 that is not displayed on the screen by performing a scroll operation.

The schedule setting region 26 is a region for displaying the schedule for the job of which the schedule is set for the printer, that is, the assigned job, for each printer, and is also a region for setting a schedule for the unassigned job. In the schedule setting region 26, a job card 30 corresponding to each assigned job among the jobs of which the job information is stored in the job information storage unit 17 is displayed as the job display element. In Fig. 2, in a case in which it is not required to distinguish between job cards 30a to 30e, the job cards 30a to 30e are collectively referred to as the "job card 30".

The schedule setting region 26 is a schedule region defined by a first axis in a vertical direction in the drawing and a second axis in a horizontal direction in the drawing orthogonal to the first axis. The axis is only indicated as a direction, and the axis itself is not shown. The second axis forms a time axis. In Fig. 2, since one day (24 hours) of April 1, 2024 is designated as the display range, the designated time axis is shown. In a direction of the first axis, schedule frames 32a, 32b, 32c, 32d, and 32e in which the schedule is set for each printer that is the job assignment candidate are arranged and displayed. In a case in which it is not required to distinguish between the schedule frames 32a to 32e, the schedule frames 32a to 32e are collectively referred to as a "schedule frame 32". In the schedule frame 32, the job card 30 of the assigned job scheduled for the printer in the designated display range is displayed with the printer name. A plurality of jobs cannot be assigned to one printer at the same date and time. A time slot in which the job is not scheduled, in other words, a time slot in which the job card 30 is not displayed in the schedule frame 32 is a so-called free time for the printer. The unassigned job is scheduled in any free time in principle. For example, in PRT_D, a time slot 34 between the job card 30c and the job card 30d is the free time. In other words, a time from the end of the assigned job corresponding to the job card 30c to the start of the assigned job corresponding to the job card 30d located after the job card 30c is the free time.

In the following description, for example, the "assigned job corresponding to the job card 30c" is also referred to as an "assigned job 30c" for convenience. The same applies the unassigned job, that is, the unassigned job corresponding to the job card 28 is also referred to as an "unassigned job 28" for convenience. In addition, in a case of collectively referring to constituent elements with subscripts such as "34a" and "34b", the subscripts are removed and collectively referred to as "34".

In the present exemplary embodiment, the execution time and the required time for the job are shown in the job card 30 shown in a rectangular shape. The "execution time" is a time during which the job is executed, and is indicated by a start date and time and an end date and time. The start date and time is shown at a position on a left side of the job card 30, which is orthogonal to the time axis. The end date and time are shown at a position on a right side of the job card 30, which is orthogonal to the time axis. In addition, the "required time" is a time required from the start to the end of the job. The required time is a difference between the start date and time and the end date and time of the job card 30, and is shown by an upper side and a lower side along the time axis in the drawing. In the present exemplary embodiment, an ownership time indicated by a length of a side along the time axis of the job card 30 shown in the drawing is also referred to as a "width" in the job card 30.

It goes without saying that the required time includes a time during which the computer and a device such as the printer operate in accordance with the control of the computer with the execution of the job, and the required time includes a preparation time for making the device such as the printer operable in accordance with the setting of the job attribute and the like. For example, a time required for exchanging the paper type of the paper loaded in the printer or a toner cartridge is also included in the required time in the present exemplary embodiment. In the present exemplary embodiment, unlike Exemplary Embodiment 2 described below, for convenience, a time required for the execution of the job will be described without considering the preparation time or the like.

In the present exemplary embodiment, the execution time and the required time for the job are indicated in a shape of the job card 30, but may be indicated by numerical values, that is, text information in the job card 30. Fig. 2 shows an example in which the type of the processing, the job ID, the required time, and the execution time are displayed in the job cards 30a and 30b, but the user may be able to select information that is a display target. In a case of the job card 30 corresponding to the job having a short required time, for example, the job cards 30d and 30e shown in Fig. 2, all the information may not be displayed in the card. In this case, for example, in a case in which the mouse over is performed on the job cards 30d and 30e, the attribute information displayed in the job card 30 may be displayed by using a display element such as a tool tip or a balloon (not shown).

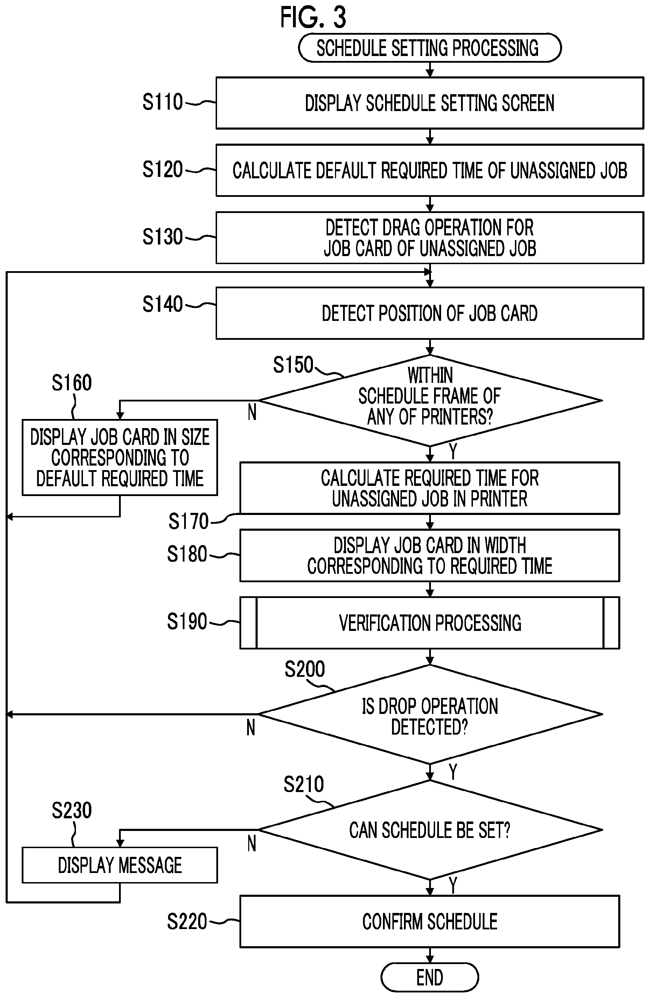

Next, in the present exemplary embodiment, processing of setting the schedule by assigning the printer to the unassigned job will be described with reference to a flowchart shown in Fig. 3. Since the information processing apparatus 10 is already used for setting the schedule for the job, it is assumed that the information required for displaying the schedule setting screen 20 shown in Fig. 2, that is, the printer information, the job information, and the schedule information are set and registered in the storage units 16 to 18, respectively.

The user, such as a schedule manager, performs a predetermined operation to issue an instruction to display the schedule setting screen 20. In a case in which the user interface unit 11 receives this operation instruction, the schedule setting processing unit 15 displays the schedule setting screen 20 on the user interface unit 11 in response to the instruction (step S110). As described above, in practice, the user interface unit 11 may display the schedule setting screen 20 on the display in response to the instruction from the schedule setting processing unit 15, but, in the following description, for convenience, it is described that the schedule setting processing unit 15 displays the schedule setting screen 20.

In an initial state of the schedule setting screen 20, the job cards 28 and 30 and the printer name are not displayed in the unassigned job display region 24 and the schedule setting region 26. The user sets conditions for the display range and the display equipment from the display condition setting region 22 of the schedule setting screen 20. For example, in a case in which a day (24 hours) of April 1, 2024 is set as the display range and printing/processing is designated as the display equipment as shown in Fig. 2, the schedule setting processing unit 15 reads out the corresponding schedule information and the printer information and the job information, which are associated with the schedule information, displays the corresponding printer name in a list as shown in Fig. 2, and displays the schedule frame 32 corresponding to each printer. Then, the schedule setting processing unit 15 displays the job card 30 corresponding to the assigned job in the schedule setting region 26, and displays the job card 28 corresponding to the unassigned job in the unassigned job display region 24. As shown in Fig. 2, the job card 28 corresponding to the unassigned job is displayed on the same screen as the schedule setting region 26.

Subsequently, the schedule setting processing unit 15 calculates a default required time for each unassigned job (step S120). However, as described above, the required time also depends on the processing capacity of the printer that executes the job, so that an exact required time cannot be calculated in a state before the job is assigned to the printer. Therefore, the "default required time" in the present exemplary embodiment is a provisional required time set for the unassigned job. The provisional required time is set in accordance with a predetermined rule.

For example, a printer that is a reference is determined in advance as a default printer in common for all the unassigned jobs, and the required time is calculated in accordance with the processing capacity of the default printer. Alternatively, the default printer may be determined for each unassigned job instead of the default printer common to the unassigned jobs. For example, the required time is calculated in accordance with the processing capacity of the printer with the highest priority among the printers that can execute the unassigned job. The "printer that can execute the job" is a printer that matches a printing attribute of the job, that is, a printer that can execute the job in accordance with the printing attributes, for example, printing of A3 size and double-sided printing, is set as the default printer of the unassigned job. Alternatively, in a case of a job generated in response to a request from a customer, a printer that satisfies a model or a quality of a printed material requested by the customer or a printer selected based on a record for the customer may be set as the default printer of the unassigned job. As described above, the default required time for the job in a case in which the job is executed by the printer estimated to be most likely to be assigned the unassigned job may be calculated with reference to the printing attribute of the job or the past record.

In addition, in the present exemplary embodiment, a general calculation method need only be used as a calculation method of the required time. The required time depends on the printing attribute of the job or the processing capacity of the printer. In regard to the printing attribute of the job, for example, in a case in which the number of printed materials generated by the execution of the job is large, the required time is relatively long. In regard to the processing capacity of the printer, in a case in which a processing speed or a printing speed of the processor is fast, the required time is relatively short. The required time is calculated based on the printing attribute of the job or the processing capacity of the printer.

The job card 28 may have different shapes depending on a length of the default required time. That is, the job card 28 may be displayed in a wider shape as the default required time is longer. On the other hand, since the default required time is an unconfirmed time, the job card 28 may be displayed in the unassigned job display region 24 in the same shape regardless of the calculated default required time. Fig. 2 shows an example of a case in which the job card 28 is displayed in the same shape. Since the required time is confirmed for the job card 30 displayed in the schedule setting region 26, the job card 30 is displayed in a shape corresponding to the required time.

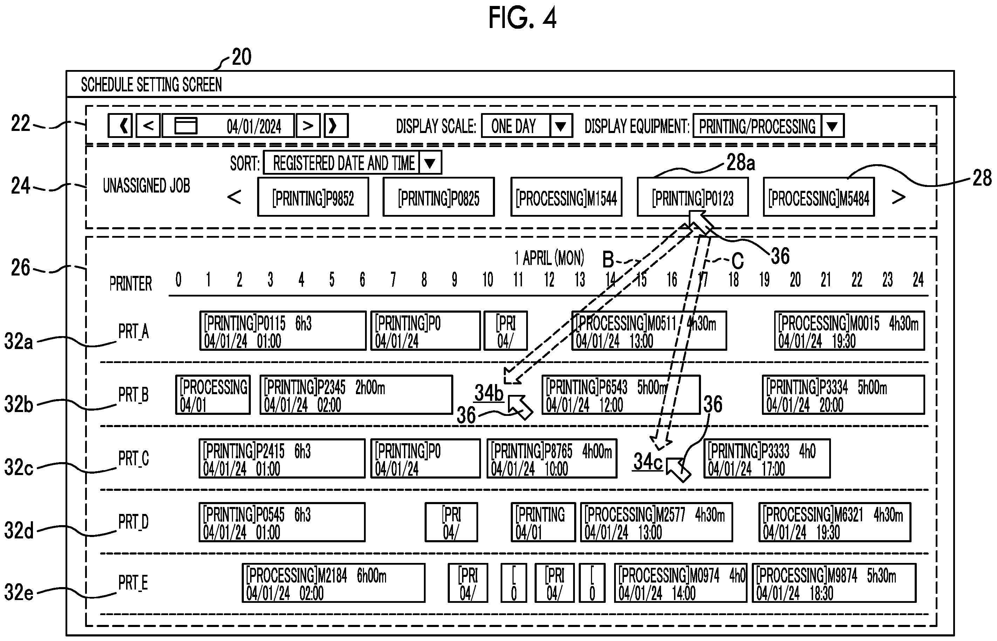

Subsequently, the user selects any one unassigned job from the unassigned job display region 24 as the schedule setting target, and performs the operation described below. The user operation will be described with reference to Fig. 4.

Fig. 4 is a diagram showing the same schedule setting screen 20 as in Fig. 2, and schematically shows the user operation on the schedule setting screen 20. Fig. 4 shows a case in which the job card 28a of the job ID "P0123" displayed in the unassigned job display region 24 is selected by the user as the schedule setting target. In the present exemplary embodiment, as an example, a case will be described in which the user operates the job card 28 using the mouse, but the method of the user operation is not limited to this example. For example, in a case in which a display unit is a touch panel type display, the user may operate the job card 28 with a finger or the like.

In the present exemplary embodiment, the job card 28 is a user interface for scheduling the unassigned job by allowing the user to perform a drag-and-drop operation for the job card 28 during the free time of any printer. Fig. 4 shows an example in which the user uses a free time 34b in a printer "PRT_B" and a free time 34c in a printer "PRT_C" as candidates for the assignment position of the unassigned job.

Here, it is assumed that the free times 34b and 34c have a time length enough to assign the unassigned job. In a case in which the user wants to set the unassigned job corresponding to the job card 28a in the free time 34b of the printer "PRT_C", the user performs the drag operation for the job card 28a and performs a movement operation of moving a mouse cursor 36 located in the unassigned job display region 24 to the position of the free time 34b as indicated by an arrow B. Then, the user checks that the mouse cursor 36 (that is, the job card 28a) is located at the position of the free time 34b in the schedule frame 32b, and then performs the drop operation. As a result, the unassigned job 28a is assigned to the printer "PRT_B", and is set to be scheduled in the free time 34b. In addition, in a case in which the user wants to set the unassigned job corresponding to the job card 28a in the free time 34c of the printer "PRT_C", the user performs the drag operation for the job card 28a and performs the movement operation of the mouse cursor 36 to the position of the free time 34c as indicated by an arrow C. Then, the user checks that the mouse cursor 36 (that is, the job card 28a) is located at the position of the free time 34c in the schedule frame 32c, and then performs the drop operation. As a result, the unassigned job 28a is assigned to the printer "PRT_C", and is set to be scheduled in the free time 34c.

The user can set the schedule for the unassigned job corresponding to the job card 28a by performing the drag-and-drop operation in this way. In the present exemplary embodiment, setting the schedule for the unassigned job and assigning the printer to the unassigned job are synonymous. In Fig. 4, for convenience of description, the mouse cursor 36 is shown to be present at three places, but is present only at any one place at the same time.

In the above description, the user operation has been described. In the following description, returning to Fig. 3, processing executed by the information processing apparatus 10 in response to the user operation will be described.

In a case in which the user selects the job card 28a of the job ID "P0123" as the schedule setting target from among the job cards 28 displayed in the unassigned job display region 24 and detects the drag operation (step S130), the schedule setting processing unit 15 starts detecting a position of the mouse cursor 36, that is, a display position of the job card 28a (step S140).

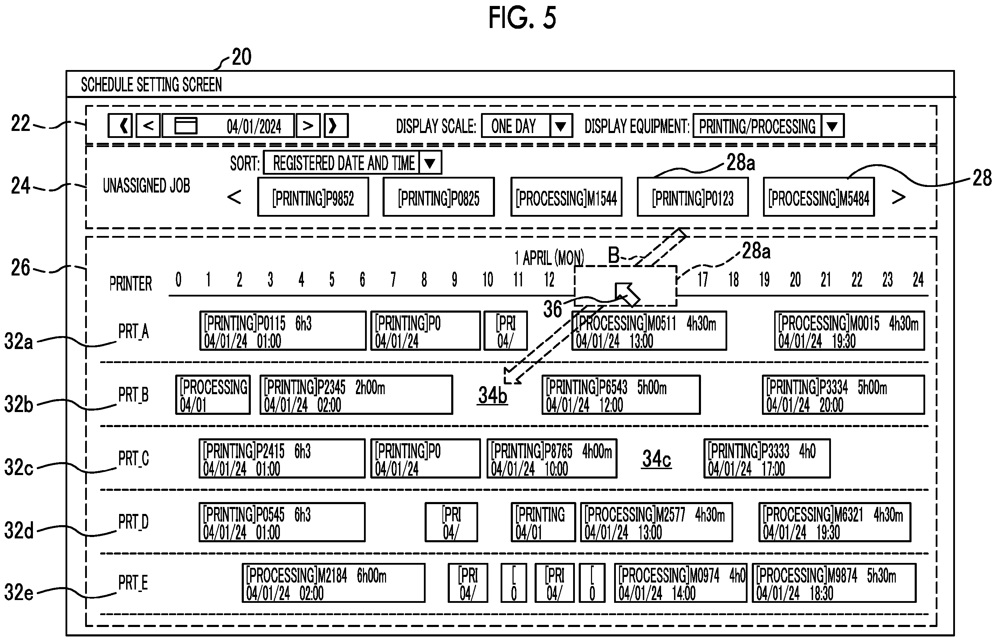

Fig. 5 is a diagram showing the same schedule setting screen 20 as in Fig. 2, but Fig. 5 shows that the position of the mouse cursor 36 is outside the unassigned job display region 24 and is not within any of the schedule frames 32. In this case (N in step S 150), the job card 28a is displayed in the same shape as in a case in which the job card 28a is displayed in the unassigned job display region 24. That is, the schedule setting processing unit 15 displays the job card 28a in a shape corresponding to the default required time (step S160).

In a case in which the job card 28a during movement is outside the unassigned job display region 24 and is not present within any of the schedule frames 32, the schedule setting processing unit 15 displays the job card 28a in a display form different from a case in which the job card 28a is displayed in the unassigned job display region 24. In Fig. 5, as an example of the display, a frame of the job card 28a is shown by a broken line, and the text information is displayed in a light color. The schedule setting processing unit 15 continues detecting the position of the job card 28a until the user performs the drop operation (step S140).

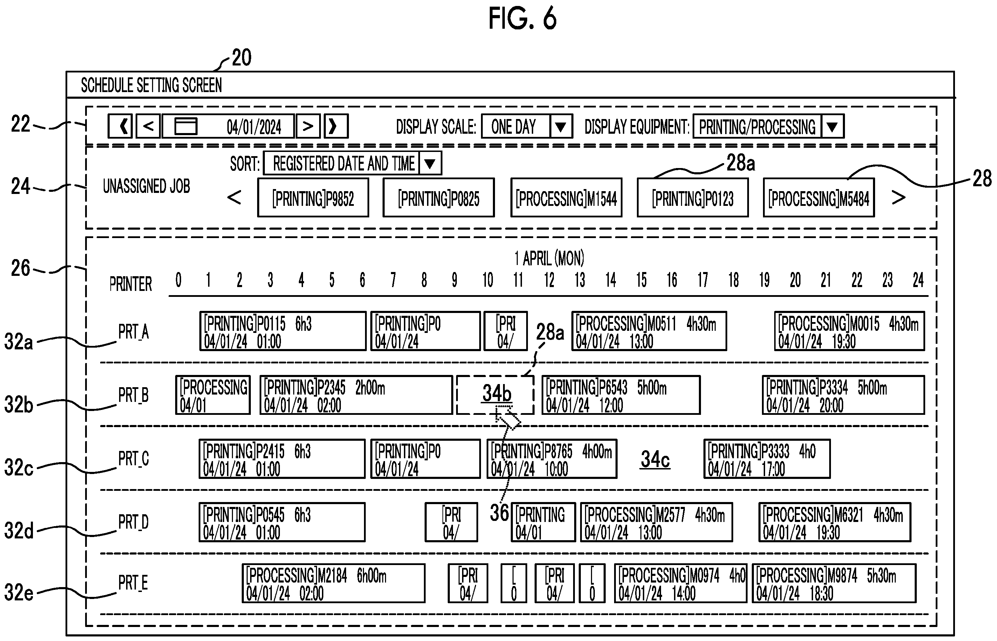

Fig. 6 is a diagram showing the same schedule setting screen 20 as in Fig. 2, but, in Fig. 6, the mouse cursor 36 is within the schedule frame 32b. In a case in which the current position of the job card 28a is within any of the schedule frames 32 (here, the schedule frame 32b) due to the movement operation for the job card 28a by the user (Y in step S150), the schedule setting processing unit 15 calculates the required time for the unassigned job 28a by the same calculation method as the default required time (step S170). In Fig. 6, since the job card 28a is located within the schedule frame 32b of the printer "PRT_B", the schedule setting processing unit 15 calculates the required time with reference to the printer information of the printer "PRT_B". Then, the schedule setting processing unit 15 displays the job card 28a in a shape corresponding to the required time in the printer "PRT_B", that is, in a width corresponding to the required time (step S180). In Fig. 6, it is found that the required time for the unassigned job 28a in the printer "PRT_B" is shorter than the default required time since the width of the job card 28a in a case of being located within the schedule frame 32b of the printer "PRT_B" is narrower than the width of the job card 28a in a case of being located within the unassigned job display region 24. In addition, in a case in which the job card 28a is located within the schedule frame 32b, the required time for the unassigned job 28a may be displayed as the text information. Here, the frame of the job card 28a is shown by a broken line to indicate that the user does not perform the drop operation.

In order for the job card 28a to be moved as indicated by the arrow B shown in Fig. 4 and to reach the schedule frame 32b, the mouse cursor 36 passes through the schedule frame 32a of the printer "PRT_A". In this case, in regard to the calculation of the required time for the unassigned job 28a in the printer "PRT_A", any of the following methods may be acceptable.

First, it is assumed that the drop operation for the job card 28a is performed within the schedule frame 32a of the printer "PRT_A", the schedule setting processing unit 15 starts calculating the required time in the printer "PRT_A" at a timing at which the job card 28a enters in the schedule frame 32a. In a case in which the mouse cursor 36 is out of the schedule frame 32a, the calculation is stopped in the middle.

Alternatively, the calculation of the required time in the printer "PRT_A" is started only in a case in which the mouse cursor 36 is located within the free time in the schedule frame 32a instead of the position at which the job card 30 is already present in the schedule frame 32a. The presence or absence of the job card 30 can be discriminated with reference to the schedule information. Alternatively, the calculation of the required time in the printer "PRT_A" may be started after the detection of the stop of the mouse cursor 36 in the schedule frame 32a. The reason why the calculation of the required time is started in step S170 is that the mouse cursor 36 is stopped within the schedule frame 32b.

Here, the schedule setting processing unit 15 verifies whether or not the unassigned job 28a is assignable (step S190). In the present exemplary embodiment, it is verified that the job card 28a is located at the position of the free time 34b of the schedule frame 32b and that the required time for the unassigned job 28a is shorter than the free time 34b. In the verification processing in the present exemplary embodiment, the verification is limited to the above-described contents for convenience.

In a case in which the drop operation is not detected although the mouse cursor 36 is located within the schedule frame 32b (N in step S200), the processing returns to step S140, and steps S140 to S200 are repeated. In a case in which the detection position of the mouse cursor 36 is not changed, strictly speaking, in a period during which the mouse cursor 36 is not out of the schedule frame 32 of the printer (here, the printer "PRT_B") for which the required time is calculated, it is not required to recalculate the required time for the unassigned job 28a corresponding to the printer.

Then, in a case in which the drop operation is detected in a case in which the current position of the mouse cursor 36 is located at the position of the free time 34b in the schedule frame 32b (Y in step S200), the schedule setting processing unit 15 refers to the result of the verification executed in step S190 to check whether or not the unassigned job 28a can be scheduled in the free time 34b. Here, in a case in which it is determined that the schedule can be set (Y in step S210), the schedule setting processing unit 15 confirms the schedule in the time slot of the free time 34 of the printer "PRT_B" corresponding to the position at which the drop operation is performed (step S220). The schedule information of the unassigned job 28a generated by being scheduled in this way is registered and managed by the schedule management unit 14 in the schedule information storage unit 18. In a case in which the schedule is confirmed, the unassigned job 28a becomes the assigned job.

On the other hand, in a case in which it is determined that the unassigned job 28a cannot be scheduled in the free time 34b (N in step S200), the schedule setting processing unit 15 notifies of the fact and the reason by a message indicating the fact and the reason (step S230).

The message is a warning message indicating that the schedule can be set because the length of the free time 34b is short, for example, by including the lengths of the calculated required time for the unassigned job 28a and the free time 34b that can be specified from the schedule information. The user refers to this message and attempts to set the schedule other than the free time 34b of the unassigned job 28a.

In the present exemplary embodiment, a message indicating that the schedule cannot be set after the drop operation is displayed (Y in step S200, N in step S210, and S230). However, in a case in which the schedule cannot be set at the position of the mouse cursor 36, as a result of the verification processing, the message described above may be displayed on the screen as the warning message before the drop operation is performed, and the user may be notified of the fact. In the following description, it is described that a message is displayed before the user performs the drop operation in a case in which it is determined that the schedule cannot be set in the verification processing in step S 190.

The above description is an example of a case in which the user moves the job card 28a by using the mouse and assigns the job card 28a to the free time 34b in the printer "PRT_B". Even in a case in which the user assigns the job to the free time 34c in the printer "PRT_C", the above-described processing need only be basically executed.

In a case in which the warning message is displayed, it is assumed that the user performs the movement operation for the mouse cursor 36 to the free time 34c in the printer "PRT_C" to check whether or not the schedule can be set without performing the drop operation at the position of the free time 34b. In addition, even in a case in which the warning message is not displayed, it is assumed that the user performs the movement operation for the mouse cursor 36 from the position of the free time 34b to the position of the free time 34c to check the required time for the unassigned job 28a in the printer "PRT_C".

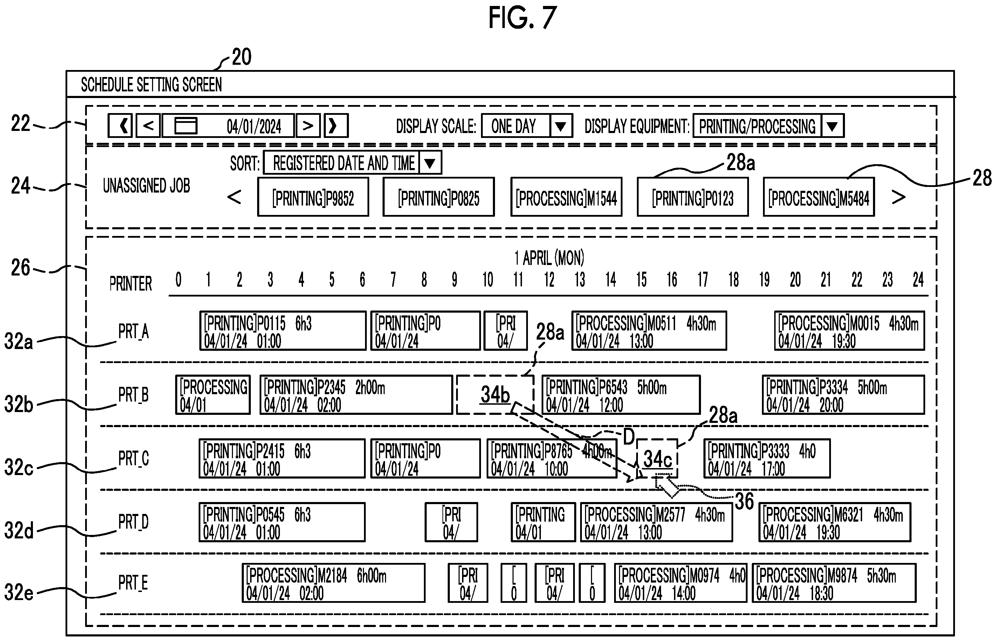

Fig. 7 is a diagram showing the same schedule setting screen 20 as in Fig. 2, but Fig. 7 is a diagram showing a case in which the mouse cursor 36 is moved while maintaining the drag from the free time 34b to the position of the free time 34c as indicated by an arrow D.

It is assumed that the user moves the mouse cursor 36 to the position of the free time 34c in the printer "PRT_C" without performing the drop operation at the position of the free time 34b (N in step S200). The schedule setting processing unit 15 also detects the position of the job card 28a during this period (step S140). Then, in a case in which it is detected that the job card 28a is located within the schedule frame 32c of the printer "PRT_C" (Y in step S150), the schedule setting processing unit 15 calculates the required time by using the same calculation method as the default required time with reference to the printer information of the printer "PRT_C" (step S170), and displays the job card 28a in the width corresponding to the required time (step S180).

In the display example shown in Fig. 7, the width of the job card 28a is changed to be smaller in a case in which the job card 28a is located within the free time 34c than in a case in which the job card 28a is located within the free time 34b. From this, it is estimated that the printer "PRT_C" has a higher processing capacity than the printer "PRT_B", and it is found that the unassigned job 28a is completed earlier in a case of being executed in the printer "PRTC". Even in this case, in a case in which the user wants to assign the unassigned job 28a to the printer "PRT_B", the user need only return the mouse cursor 36 to the position of the free time 34b while maintaining the dragging state and perform the drop operation for the job card 28a at the position of the free time 34b.

In Fig. 7, for convenience of description, the job card 28a in the free time 34b is shown even after the mouse cursor 36 is moved to the free time 34c in order to easily compare the shapes of the job cards 28a. However, the job card 28a in the free time 34b may be hidden in accordance with the movement of the mouse cursor 36. The job card 28a that is temporarily left need only be deleted from the screen, for example, at a timing at which the schedule is confirmed by the drop operation for the job card 28a or at a timing at which the schedule setting is temporarily stopped.

According to the present exemplary embodiment, the user can assign the unassigned job to any printer and schedule the unassigned job by performing the drag-and-drop operation described above. The job card 28 corresponding to the unassigned job is displayed as the job card 30 in the schedule setting region 26 after the unassigned job is scheduled.

In the present exemplary embodiment, the required time for the unassigned job in the printer is indicated in the shape of the job card 28 (specifically, the width of the job card 28) in the schedule frame 32, but the required time may be displayed as the text information in the job card 28, or, for example, a window screen such as a balloon may be separately displayed to display the required time as the text information in a display region in the window screen.

### Exemplary Embodiment 2.

As described in Exemplary Embodiment 1, the "required time" of the job is a time required from the start to the end of the job, and includes not only a time during which the computer and the printer operate but also a preparation time for enabling the printer to operate in accordance with the printing attribute information. In Exemplary Embodiment 1, the preparation time and the like are not considered for convenience of description, but, in the present exemplary embodiment, a case will be described in which the preparation time and the like are reflected in the required time.

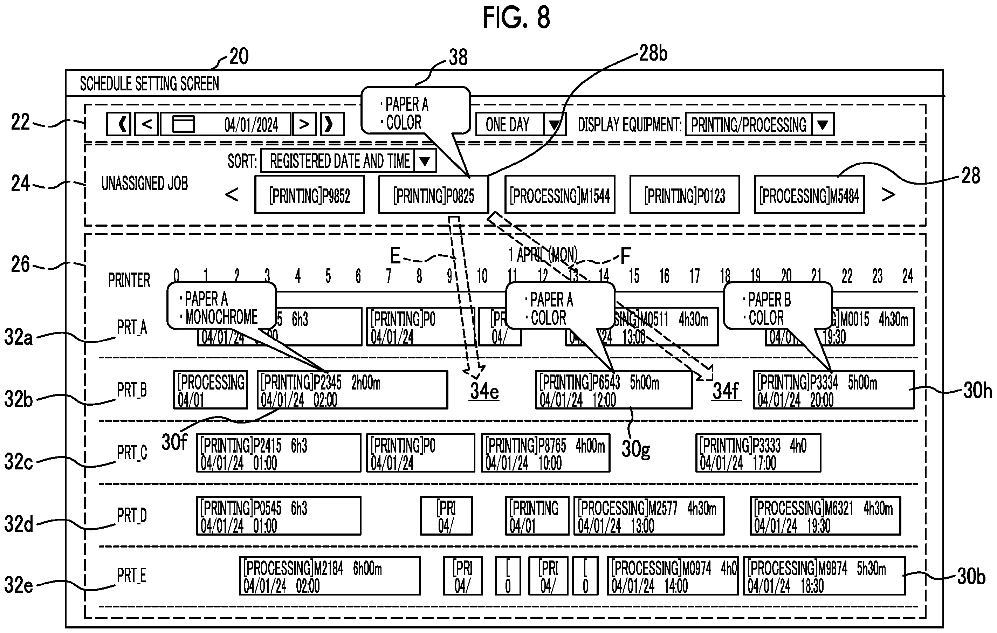

Fig. 8 is a diagram showing the same schedule setting screen 20 as in Fig. 2, but, in Fig. 8, the unassigned job and the assigned job used for the description are provided with a balloon 38. The type of paper (paper A or paper B) and the color information (color/monochrome) included in the printing attribute information of the job are displayed in the balloon 38. The attribute information displayed in the balloon is attribute information in which it is discriminated that the preparation work is newly required in the assigned job to be executed after the unassigned job in a case in which the schedule for the unassigned job is confirmed by the drop operation for the job card 28. The balloon 38 is shown for description, and does not need to be a screen display target, but may be displayed on the screen in response to a predetermined user operation.

Here, as an example, a case will be described in which the user assigns the unassigned job corresponding to the job card 28b to a free time 34e or a free time 34f in the printer "PRT B". As described above, for convenience of description, the unassigned job corresponding to the job card 28b is also referred to as an "unassigned job 28b". In Fig. 8, the mouse cursor is not shown.

A basic flow of the block configuration (Fig. 1) and the schedule setting processing (Fig. 3) of the information processing apparatus 10 in the present exemplary embodiment may be the same as the basic flow in Exemplary Embodiment 1. In the present exemplary embodiment, a specific processing content of the verification processing (step S190) shown in Fig. 3 is different from the specific processing content in Exemplary Embodiment 1.

Hereinafter, the schedule setting processing in the present exemplary embodiment will be described with reference to the flowchart shown in Fig. 3. In addition, the description of the same processing as in Exemplary Embodiment 1 will be omitted as appropriate.

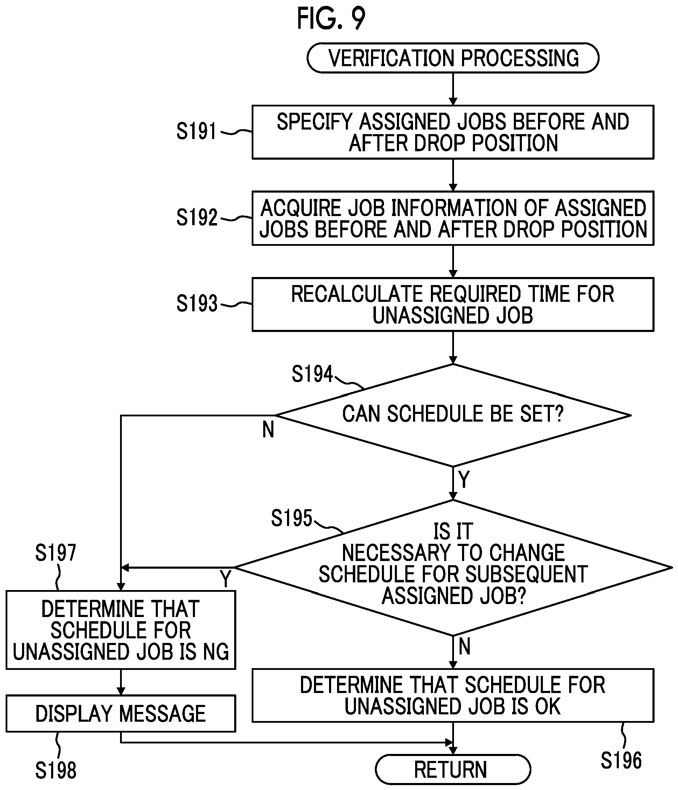

First, in a case in which the user moves the job card 28b to the position of the free time 34e of the printer "PRT_B" as indicated by an arrow E (Y in steps S110 to S140 and S150), the schedule setting processing unit 15 calculates the required time for the unassigned job 28a by the same calculation method as the default required time (step S170), and displays the job card 28b in the shape corresponding to the required time (step S180). Then, the schedule setting processing unit 15 executes the verification processing of whether or not the unassigned job 28b can be assigned to the free time 34e (step S190). The verification processing executed in the present exemplary embodiment will be described with reference to a flowchart shown in Fig. 9.

The free time 34e in which the job card 28b is located is located between a job card 30f and a job card 30g. The schedule setting processing unit 15 specifies the assigned jobs 30f and 30g scheduled before and after the free time 34e with reference to the schedule information (step S191), and acquires the job information of the assigned jobs 30f and 30g (step S192). By acquiring the job information, the printing attribute information indicated by the balloon 38 can be specified. Specifically, the assigned job 30f is to execute monochrome printing on the paper A. The assigned job 30g is to execute color printing on the paper A.

In the example shown in Fig. 8, the unassigned job 28b is to execute color printing on the paper A. Since the assigned job 30f executed before the unassigned job 28b is to execute monochrome printing on the paper A, a color toner cartridge is not used. Therefore, the preparation work for exchanging the toner cartridge to the color toner cartridge may occur before the unassigned job 28b is started. Here, the description will be made on the assumption that the preparation work occurs.

In step S170, the schedule setting processing unit 15 calculates the required time for the unassigned job 28b, but does not take the preparation time into consideration at this case. Therefore, the schedule setting processing unit 15 in the present exemplary embodiment recalculates the required time in response to the occurrence of the preparation work (step S193).

Since the content of the preparation work such as the replacement of a component or the transport of an object can be assumed in advance, the preparation time is set in advance in consideration of, for example, a work time for the replacement of the component such as the toner cartridge, a work time corresponding to the replacement work level, a position of a storage (that is, a time for movement to the storage), and the like for each preparation work. Then, the schedule setting processing unit 15 need only specify each preparation time to be used for recalculation with reference to the printing attribute information of the assigned job 30f from among the preparation times set in advance, and recalculate the required time such that the specified preparation time is included in the required time calculated in step S170.

Subsequently, in a case in which it is determined that the recalculated required time for the unassigned job 28b is equal to or shorter than the free time 34e, that is, the unassigned job 28b can be scheduled in the free time 34e of the printer "PRT B" (Y in step S194), the schedule setting processing unit 15 checks whether or not it is required to change the schedule for the assigned job 30g that is executed after the unassigned job 28b, assuming that the unassigned job 28b is scheduled in the free time 34e.

Here, as described above, the unassigned job 28b is to execute color printing on the paper A. On the other hand, the assigned job 30g is to execute color printing on the paper A. That is, even in a case in which the unassigned job 28b is scheduled in the free time 34e, new preparation work does not occur in the assigned job 30g. Therefore, it is not required to change the required time for the assigned job 30g.

As described above, in a case in which it is not required to change the schedule for the assigned job 30g to be executed after the unassigned job 28b (N in step S195) even in a case in which the schedule for the unassigned job 28b is set, it is determined that the schedule for the unassigned job 28b can be set in the free time 34e (step S196). A message indicating the verification result that the schedule can be set may be displayed on the schedule setting screen 20 at a point in time at which step S190 is executed.

On the other hand, since the recalculated required time for the unassigned job 28b is longer than the free time 34e, in order to schedule the unassigned job 28b in the free time 34e, in a case in which it is determined that it is required to change the schedule for the assigned job 30g (N in step S194), the schedule setting processing unit 15 determines that the unassigned job 28b cannot be scheduled in the free time 34e (step S197). Then, the schedule setting processing unit 15 displays a message indicating the fact (step S198). The user knows that the job card 28b cannot be scheduled in the free time 34e before performing the drop operation from this message. Other processing in a case in which the schedule cannot be set will be described below.

Next, a case will be described in which the user moves the job card 28b to the position of the free time 34f of the printer "PRT_B" as indicated by an arrow F shown in Fig. 8.

In a case in which the user moves the job card 28b to the position of the free time 34f (Y in steps S110 to S140 and S150), the schedule setting processing unit 15 calculates the required time in the unassigned job 28a by the same calculation method as the default required time (step S170), and displays the job card 28b in the shape corresponding to the required time (step S180). Then, the schedule setting processing unit 15 executes the verification processing of whether or not the unassigned job 28b can be assigned to the free time 34f (step S190). The verification processing will be described with reference to the flowchart shown in Fig. 9.

The free time 34f in which the job card 28b is located is present between the job card 30g and the job card 30h. The processing (steps S191 to S193) for the schedule setting processing unit 15 to recalculate the required time in consideration of the preparation work from the job information of the assigned jobs 30g and 30h scheduled before and after the free time 34f has already been described, and thus the description will be omitted.

Since both the unassigned job 28b and the assigned job 30g are to execute color printing on the paper A, no preparation work occurs in the unassigned job 28b. That is, the required time is the same as the required time calculated in step S170 even in a case in which the required time is recalculated. In a case in which the attribute values related to the occurrence of the preparation time are the same as a result of the comparison of the printing attribute information as in this example, the recalculation (step S 193) of the required time may not be executed.

Subsequently, in a case in which it is determined that the recalculated required time for the unassigned job 28b is equal to or shorter than the free time 34f, that is, the unassigned job 28b can be scheduled in the free time 34f of the printer "PRT B" (Y in step S194), the schedule setting processing unit 15 checks whether or not it is required to change the schedule for the assigned job 30h that is executed after the unassigned job 28b, assuming that the unassigned job 28b is scheduled in the free time 34f.

Here, in a case in which the printing attribute information of the assigned job 30h is referred to, the assigned job 30h is to execute color printing on the paper B. Since the unassigned job 28b is to execute color printing on the paper A, the assigned job 30g may have the preparation work of exchanging the type of paper to be filled in a paper feed tray. Here, the description will be made on the assumption that the preparation work occurs.

The fact that the preparation work is newly required for the assigned job 30g in this way means that the required time for the assigned job 30g is extended, and the assigned job 30g cannot be executed as the current content of the schedule information. That is, scheduling the unassigned job 28b in the free time 34f corresponds to affecting the execution of the assigned job 30g.

In this way, in a case in which it is required to change the schedule for the assigned job 30h (that is, to reset the schedule) (Y in step S195), the schedule setting processing unit 15 determines that the unassigned job 28b cannot be scheduled in the free time 34f (step S197). Then, the schedule setting processing unit 15 displays a message indicating the fact (step S 198). The user knows that the job card 28b cannot be scheduled in the free time 34f before performing the drop operation from this message.

However, even in a case in which it is determined that the unassigned job 28b cannot be scheduled in the free time 34f, there is a possibility that the unassigned job 28b can be scheduled by executing the processing described below. Here, another processing in a case of determining that the schedule cannot be set will be described.

First, in step S194 described above, the reason why the unassigned job 28b cannot be scheduled in the free time 34e is that the required time for the unassigned job 28b is longer than the free time 34e. Therefore, the free time 34e can be increased by shifting the assigned job 30f scheduled before the free time 34e forward, shifting the assigned job 30g scheduled after the free time 34e backward, or shifting both the assigned job 30f and the assigned job 30g.

In a case in which the assigned job 30f is shifted forward, that is, in a case in which the execution time for the assigned job 30f is changed, the schedule setting processing unit 15 may automatically and forcibly change the schedule information of the assigned job 30f. Alternatively, processing may be executed, which causes the information processing apparatus 10 or the user to inquire of the owner or the like whether or not to change the schedule setting of the assigned job 30, which is a target of the schedule setting change, in this example, the assigned job 30f.

Not only the assigned job 30f but also one or a plurality of assigned jobs 30 scheduled before the assigned job 30f may be shifted forward together. However, in this case, it goes without saying that the schedules for the job that is currently being executed and for the previous job cannot be adjusted.

In a case in which the assigned job 30g is shifted backward, that is, in a case in which the execution time for the assigned job 30g is changed, the same countermeasure can be made as in a case in which the assigned job 30f is shifted forward.

In a case of shifting the schedule for each assigned job 30, a range of the execution time to be changed, specifically, an execution start date and time of each assigned job 30 or an available execution start date and time may be included in a message issued to the user.

In addition, in step S195, the change required for the schedule for the assigned job 30h includes a change of shifting the assigned job 30h backward and a change of extending the required time in the assigned job 30h. As described above, the countermeasure for the former case is to change the execution time for the assigned job 30h. In a case in which there is a margin between the assigned job 30h and the assigned job 30 to be executed after the assigned job 30h (that is, in a case in which there is sufficient free time), it is not required to change the schedule for the assigned job 30 scheduled in the rear section after the assigned job 30h.

In addition, the countermeasure for the latter case is to extend the required time for the assigned job 30h. In this case as well, as in the former case, in a case in which there is a margin between the assigned job 30h and the assigned job 30 to be executed after the assigned job 30h, the setting change is only to reset the schedule information of the assigned job 30h.

In a case of changing the schedule for the assigned job 30h, a range of the execution time to be changed, specifically, an execution start date and time of the assigned job 30f or an available execution start date and time may be included in a message issued to the user.

As described above, in a case in which the unassigned job is scheduled in the free time, and the assigned job located before and after the free time is affected, a message indicating the fact can be displayed for notification to the user. However, in the present exemplary embodiment, even in such a situation, the possibility of scheduling the unassigned job in the free time is attempted by changing the schedules for the assigned jobs located before and after the free time, and, as a result, in a case in which the unassigned job can be scheduled, the user is notified of the fact and the countermeasure by a message.

As a result, in a situation in which the unassigned job 28 cannot be scheduled in the free time 34 in the current setting, the user can set the schedule by temporarily stopping the scheduling of the unassigned job and requesting the owner or the like of the assigned job to change the schedule for the assigned job.

According to the present exemplary embodiment, in a case in which the schedule for the unassigned job, which is the schedule setting target, is set in the free time, it is possible to determine whether or not the schedule can be set with reference to the attribute information of not only the unassigned job but also the assigned jobs located before and after the unassigned job.

In the present exemplary embodiment, the schedule for the unassigned job is confirmed by the drop operation for the job card 28, but information about an influence on the assigned job is displayed before the schedule is confirmed at the position to which the job card 28 is moved by the drop operation. According to the above-described example, before the schedule for the unassigned job 28b is confirmed in the free time 34f, information about the influence on the assigned job 30g and the assigned job scheduled before the assigned job 30g, or the assigned job 30h and the assigned job scheduled behind the assigned job 30h is displayed as a message. In the present exemplary embodiment, in a case in which the schedule cannot be set, the user can be notified of a specific countermeasure for enabling the scheduling by a message.

As described above, the jobs affected by scheduling the unassigned job are basically the assigned jobs executed before and after in the printer assigned the unassigned job (strictly speaking, the unassigned job becomes the assigned job by confirming the schedule). According to the above-described example, in a case in which the unassigned job 28b is scheduled in the free time 34e, the affected assigned jobs are the assigned jobs 30f and 30g in the printer "PRT_B". However, in a case in which the assigned jobs in other printers (that is, printers other than the printer "PRT_B" in which the unassigned job 28b is scheduled) are affected, the fact is displayed. For example, in a case in which the unassigned job 28b is executed first, there is a possibility that the unassigned job 28b affects the assigned job using the same consumable (toner cartridge, paper, or the like) as the unassigned job 28b.

In the above description, the preparation work before the execution of the job is focused, but the required time may be recalculated by taking into account post-processing for the printed material obtained by executing the job, for example, a time of leaving for drying, a work of rewinding to suppress curling, and the like.

In the present exemplary embodiment, each processing is executed by any computer. In addition, any computer may execute these pieces of processing by a processor, a program, or a combination thereof. Any computer may be a general-purpose computer, a computer for a specific use, a system such as a workstation, or other hardware elements capable of executing the program.

The processor may be configured by one or a plurality of pieces of hardware, and the types of hardware are not limited. In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device). In addition, the processor has each unit or each means that executes various types of processing in the present exemplary embodiment. Further, the types of hardware may be a combination of different types of hardware. In the embodiments above, the term "processor" is broad enough to encompass one processor or plural processors in collaboration which are located physically apart from each other but may work cooperatively. The order of operations of the processor is not limited to one described in the embodiments above, and may be changed. The hardware is configured by an electric circuit (circuitry) in which circuit elements, such as semiconductor elements, are combined.

Further, the present exemplary embodiment may be implemented by hardware, software, firmware, microcode, or a combination thereof. Software, firmware, and microcode are configured by the program. In addition, the program may be, for example, a program module group, and each function thereof may be implemented by a processor configured to execute each function. The program may be a program code or a plurality of code segments stored in one or a plurality of non-transitory computer-readable media (for example, storage media or other storages). The program may be stored in a plurality of non-transitory computer-readable media present in physically separated devices. The program code or the code segment may represent any combination of a procedure, a function, a sub-program, a routine, a subroutine, a module, a software package, a class, or an instruction, a data structure, or a program statement. The program code or the code segment may be connected to another code segment or a hardware circuit by transmitting and receiving information, data, an argument, a parameter, or a content of a memory.

### (Supplementary Note)

(((1))) An information processing system comprising:
   a processor configured to:
   display a schedule region defined by a first axis and a second axis, in which schedule frames of job execution devices that are job assignment candidates are arranged and displayed in a direction of the first axis, and the second axis forms a time axis;
   display, in the schedule frame of the job execution device, a job display element corresponding to a job that is assigned to the job execution device and indicating an execution time and a required time for the job in the job execution device;
   refer to, in response to a movement operation performed by a user to move a job display element corresponding to an unscheduled job to the schedule region, processing capacity information of a job execution device corresponding to a moved position of the job display element and attribute information of a job corresponding to the job display element, to calculate the required time for the job in the job execution device; and
   display the job display element in a shape corresponding to the calculated required time.
(((2))) The information processing system according to (((1))), wherein the processor is configured to:
   further refer to attribute information of a job corresponding to a job display element present before the moved position in a schedule frame of the job execution device corresponding to the moved position, to calculate the required time.
(((3))) The information processing system according to (((1))) or (((2))), wherein the processor is configured to:
   in a case in which attribute information of a job scheduled after the moved position is referred to, notify of a warning in a case in which execution of the job corresponding to the job display element affects execution of the job scheduled after the moved position.
(((4))) The information processing system according to any one of (((1))) to (((3))),
   wherein the attribute information of the job is attribute information in which preparation work for executing a subsequent job to be executed is required in a case in which a setting content of attribute information of each job to be subsequently executed is different.
(((5))) The information processing system according to any one of (((1))) to (((4))), wherein the processor is configured to:
   calculate a required time for the job in a case in which a job execution device estimated to be most likely to be assigned the job executes the job, for the job display element corresponding to the unscheduled job, in accordance with a predetermined rule; and
   display the job display element in a shape corresponding to the calculated required time.
(((6))) The information processing system according to any one of (((1))) to (((5))), wherein the processor is configured to:
   in a case in which the user moves the job display element of the unscheduled job by a drag operation as the movement operation, change the shape of the job display element in the schedule region in accordance with a required time for the job in a job execution device corresponding to a current position of the job display element.
(((7))) The information processing system according to (((6))), wherein the processor is configured to:
   schedule a job corresponding to the job display element at a position at which the user performs a drop operation for the job display element.
(((8))) The information processing system according to any one of (((1))) to (((7))), wherein the processor is configured to:
   display information about an influence on a job that is already scheduled, before scheduling the unscheduled job at a position to which the job display element is moved.
(((9))) A program causing a computer to implement:
   a function of displaying a schedule region defined by a first axis and a second axis, in which schedule frames of job execution devices that are job assignment candidates are arranged and displayed in a direction of the first axis, and the second axis forms a time axis;
   a function of displaying, in the schedule frame of the job execution device, a job display element corresponding to a job that is assigned to the job execution device and indicating an execution time and a required time for the job in the job execution device;
   a function of referring to, in response to a movement operation performed by a user to move the job display element to the schedule region, processing capacity information of a job execution device corresponding to a moved position of the job display element and attribute information of a job corresponding to the job display element, to calculate the required time for the job in the job execution device; and
   a function of displaying the job display element in a shape corresponding to the calculated required time.

In the invention according to (((1))), the required time for the job, which differs depending on the processing capacity of the job execution device, can be displayed in a visually recognizable manner.

In the invention according to (((2))), a required time for a job to be scheduled in the future can be calculated in consideration of an influence of the job executed immediately before a scheduled time.

In the invention according to (((3))), in a case in which the job is scheduled at the moved position of the job display element displayed in an unassigned job display region, and the job affects a job to be executed immediately after the scheduled time, notification of the fact can be issued.

In the invention according to (((4))), the required time can be calculated in consideration of a time required for the preparation work that occurs in a case in which the job is executed.

In the invention according to (((5))), notification of an approximate required time can be issued before actually scheduling the job.

In the invention according to (((6))), notification of a required time in a case in which the job is actually executed by the job execution device corresponding to the current position of the job display element can be issued before actually scheduling the job in the job execution device.

In the invention according to (((7))), the schedule for the job corresponding to the job display element being operated can be confirmed.

In the invention according to (((8))), notification of an influence on the job that is already scheduled in a case in which the job that is not yet scheduled is actually scheduled can be issued in advance.

In the invention according to (((9))), the required time for the job, which differs depending on the processing capacity of the job execution device, can be displayed in a visually recognizable manner.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

10: information processing apparatus
11: user interface unit
12: printer information management unit
13: job management unit
14: schedule management unit
15: schedule setting processing unit
16: printer information storage unit
17: job information storage unit
18: schedule information storage unit
20: schedule setting screen
22: display condition setting region
24: unassigned job display region
26: schedule setting region
28, 28a, 28b, 30, 30a to 30h: job card
32a to 32e: schedule frame

## Claims

1. An information processing system comprising:
a processor configured to:
display a schedule region defined by a first axis and a second axis, in which schedule frames of job execution devices that are job assignment candidates are arranged and displayed in a direction of the first axis, and the second axis forms a time axis;
display, in the schedule frame of the job execution device, a job display element corresponding to a job that is assigned to the job execution device and indicating an execution time and a required time for the job in the job execution device;
refer to, in response to a movement operation performed by a user to move a job display element corresponding to an unscheduled job to the schedule region, processing capacity information of a job execution device corresponding to a moved position of the job display element and attribute information of a job corresponding to the job display element, to calculate the required time for the job in the job execution device; and
display the job display element in a shape corresponding to the calculated required time.

2. The information processing system according to claim 1, wherein the processor is configured to:
further refer to attribute information of a job corresponding to a job display element present before the moved position in a schedule frame of the job execution device corresponding to the moved position, to calculate the required time.

3. The information processing system according to claim 1 or 2, wherein the processor is configured to:
in a case in which attribute information of a job scheduled after the moved position is referred to, notify of a warning in a case in which execution of the job corresponding to the job display element affects execution of the job scheduled after the moved position.

4. The information processing system according to any one of claims 1 to 3,
wherein the attribute information of the job is attribute information in which preparation work for executing a subsequent job to be executed is required in a case in which a setting content of attribute information of each job to be subsequently executed is different.

5. The information processing system according to any one of claims 1 to 4, wherein the processor is configured to:
calculate a required time for the job in a case in which a job execution device estimated to be most likely to be assigned the job executes the job, for the job display element corresponding to the unscheduled job, in accordance with a predetermined rule; and
display the job display element in a shape corresponding to the calculated required time.

6. The information processing system according to any one of claims 1 to 5, wherein the processor is configured to:
in a case in which the user moves the job display element of the unscheduled job by a drag operation as the movement operation, change the shape of the job display element in the schedule region in accordance with a required time for the job in a job execution device corresponding to a current position of the job display element.

7. The information processing system according to claim 6, wherein the processor is configured to:
schedule a job corresponding to the job display element at a position at which the user performs a drop operation for the job display element.

8. The information processing system according to any one of claims 1 to 7, wherein the processor is configured to:
display information about an influence on a job that is already scheduled, before scheduling the unscheduled job at a position to which the job display element is moved.

9. A program causing a computer to implement:
a function of displaying a schedule region defined by a first axis and a second axis, in which schedule frames of job execution devices that are job assignment candidates are arranged and displayed in a direction of the first axis, and the second axis forms a time axis;
a function of displaying, in the schedule frame of the job execution device, a job display element corresponding to a job that is assigned to the job execution device and indicating an execution time and a required time for the job in the job execution device;
a function of referring to, in response to a movement operation performed by a user to move the job display element to the schedule region, processing capacity information of a job execution device corresponding to a moved position of the job display element and attribute information of a job corresponding to the job display element, to calculate the required time for the job in the job execution device; and
a function of displaying the job display element in a shape corresponding to the calculated required time.

10. An information processing method comprising:
displaying a schedule region defined by a first axis and a second axis, in which schedule frames of job execution devices that are job assignment candidates are arranged and displayed in a direction of the first axis, and the second axis forms a time axis;
displaying, in the schedule frame of the job execution device, a job display element corresponding to a job that is assigned to the job execution device and indicating an execution time and a required time for the job in the job execution device;
referring to, in response to a movement operation performed by a user to move the job display element to the schedule region, processing capacity information of a job execution device corresponding to a moved position of the job display element and attribute information of a job corresponding to the job display element, to calculate the required time for the job in the job execution device; and
displaying the job display element in a shape corresponding to the calculated required time.
